(19) Europäisches Patentamt
European Patent Office
Office européen des brevets

(11) **EP 3 301 925 A1**

(12) **EUROPEAN PATENT APPLICATION**

(43) Date of publication:
**04.04.2018 Bulletin 2018/14**

(51) Int Cl.:
***H04N 19/30*** (2014.01)   ***H04N 19/593*** (2014.01)
***H04N 19/625*** (2014.01)

(21) Application number: **16306277.1**

(22) Date of filing: **30.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **THOREAU, Dominique
35576 CESSON-SÉVIGNÉ (FR)**
• **ALAIN, Martin
35576 CESSON-SÉVIGNÉ (FR)**
• **LE PENDU, Mikael
35576 CESSON-SÉVIGNÉ (FR)**

(74) Representative: **Huchet, Anne
TECHNICOLOR
1-5, rue Jeanne d'Arc
92130 Issy-les-Moulineaux (FR)**

(54) **METHOD FOR LOCAL INTER-LAYER PREDICTION INTRA BASED**

(57)   When performing inter-layer prediction, the present method and apparatus make predictive inter-layer determinations, such as from the LDR layer to the HDR layer, based on pixels used in the LDR layer for intra prediction of the LDR block using an intra LDR mode and also based on the homologous pixels in the HDR layer for the intermediate intra prediction block using the same intra LDR mode. By using these bases, it is possible to estimate an inverse tone mapping function and then apply this estimated function to the LDR block in order to determine the inter-layer HDR prediction block.

FIG. 6

To Fig. 6 (Continued)

From Fig. 6

$\mathcal{FIG}.\ 6(Continued)$

**Description**

**FIELD OF THE INVENTION**

This invention relates to digital video compression and, more particularly, to a method for improved prediction of the enhancement layer block via the prediction block of the base layer by utilizing intra based, local inter-layer prediction.

**BACKGROUND OF THE INVENTION**

High Dynamic Range (HDR) scalable video coding and decoding typically involves a tone mapped base layer, $I_b$ dedicated to Low Dynamic Range video (LDR) encoding together with an enhancement layer, $I_e$, dedicated to the HDR encoding. An LDR image frame has a dynamic range that is lower than the dynamic range of an HDR image.

In general, when used in video coding arrangements, a tone mapping operator (TMO) is directly applied to the HDR image signal in order to obtain an LDR image signal. Tone mapping operators can reproduce a wide range of values available in an HDR image for display on an LDR display. The LDR image is then capable of being displayed on a standard LDR display.

In this field, there is a wide variety of tone mapping operators available for use. Two types of these operators are known as global operators and local operators. Many, if not most, of these operators are nonlinear. Examples of these types of tone mapping operators are well known in the art and are given in the following exemplary references: Z. Mai et al., "On-the-fly tone mapping for backward-compatible high dynamic range image/video compression", Proceedings of 2010 IEEE International Symposium on Circuits and Systems (ISCAS) (May-June 2010); M. Grundland et al, "Nonlinearmultiresolution blending", Machine Graphics & Vision International Journal, Volume 15, No. 3, pp. 381-390 (February 2006); Z. Wang et al. "Interactive tone mapping for high dynamic range video", ICASSP 2010; P. Burt et al., "The Laplacian Pyramid as a compact image code", IEEE Transactions on Communications, Vol. 31, No. 4, pp. 532 - 540 (April 1983); P. Burt, "The Pyramid as Structure for Efficient Computation", Multiresolution Image Processing and Analysis, Vol. 12 of the Springer Series in Information Sciences pp 6-35 (1984); WIPO International Publication No. WO 2011/002505 entitled *"Zone-based tone mapping"* for Z. Jiedu et al.; and WIPO International Publication No. WO 2010/018137 entitled *"Method for modifying a reference block of a reference image, method for encoding or decoding a block of an image by help of a reference block and device therefore and storage medium or signal carrying a block encoded by help of a modified reference* B" for D. Thoreau et al.

Global operators use characteristics of an HDR frame to compute a monotonically increasing tone map curve for the whole image. As a consequence, these operators can ensure spatial brightness coherency. But, these tone mapping operators usually fail to reproduce finer details contained in the HDR image frame. In order to perform inverse tone mapping, certain parameters must be transmitted to the decoder so that the decoder "knows" the global tone mapping curve applied during encoding.

In contrast to the global tone mapping operators, local operators tone map each pixel in a frame based on its spatial neighborhood. These local tone mapping techniques increase local spatial contrast, thereby providing more detailed frames.

While application of these operators is known to cause certain problems with diminished temporal coherence, it is this nonlinear nature of the tone mapping operator that creates significant inefficiencies and potential problems in performing inverse tone mapping (that is, iTMO) for certain types of prediction such as inter-layer prediction and the like. One example of an inter-layer prediction involves the prediction of a block be of enhancement layer $I_e$ from the prediction block $\tilde{b}_e$ from the base layer $I_b$, whether the base layer prediction block has been up-sampled in a spatial scalability environment or not up-sampled in an SNR scalability environment.

**SUMMARY OF THE INVENTION**

The problems and inefficiencies of prior art image encoding and decoding systems, when performing inter-layer prediction, are overcome by the subject methods and apparatus disclosed herein by making predictive inter-layer determinations, such as from the LDR layer to the HDR layer, based on pixels used in the LDR layer for intra prediction of the LDR block using an intra LDR mode and also based on the homologous pixels in the HDR layer for the intermediate intra prediction block using the same intra LDR mode. By using these bases, it is possible to estimate an inverse tone mapping function and then apply this estimated function to the LDR block in order to determine the inter-layer HDR prediction block. This then allows the image encoding and decoding operations to proceed more efficiently.

**BRIEF DESCRIPTION OF THE DRAWINGS**

The teachings of the present invention can be readily understood by considering the following detailed description in conjunction with the accompanying drawings, in which:

    FIG. 1 illustrates spatial prediction;
    FIG. 2 illustrates intra 4x4 prediction;
    FIG. 3 illustrates intra 8x8 prediction;
    FIG. 4 illustrates intra prediction modes according to the HEVC standard;
    FIG. 5(a) and (b) shows conceptual operations, image blocks and other parameters from the perspective of the base layer and enhancement layer, respectively, in accordance with the principles of the present invention;
FIG. 6 shows a block diagram representation of an encoder realized in accordance with the principles of the present invention; and
FIG. 7 shows a block diagram representation of a decoder realized in accordance with the principles of the present invention.

It should be understood that the drawings are for purposes of illustrating the concepts of the invention and are not necessarily the only possible configuration for illustrating the invention. To facilitate understanding, identical reference numerals have been used, where possible, to designate identical elements that are common to the figures.

## DETAILED DESCRIPTION

The present methods and apparatus are directed toward improving the processing of inter-layer prediction in the context of LDR-HDR scalable video coding. Scalability may involve SNR scalability and spatial scalability, both of which are well known in the art. Although the description below may focus predominately on SNR scalable applications, it will be understood that the present methods and apparatus are equally applicable in a spatial scalability environment where block up-sampling is performed.

In order to understand certain concepts described herein, it is believed to be informative to provide the following background information on the principle of spatial prediction in two of the various standards used in digital video compression technology. The two standards are known as High Efficiency Video Coding (HEVC) and Advanced Video Coding (AVC). Information about these well known standards is found as follows:

•   High Efficiency Video Coding (HEVC), also known as H.265 and MPEG-H Part 2, published in 2014 as ITU-T, High Efficiency Video Coding (HEVC), Recommendation ITU-T H.265 | International Standard ISO/IEC 23008-2; and
•   Advanced Video Coding (AVC), also known as H.264 or MPEG-4 Part 10, published in 2002 as ITU-T, Rec. H2641|SIO/IEC 14496-10 AVC (MPEG-4).

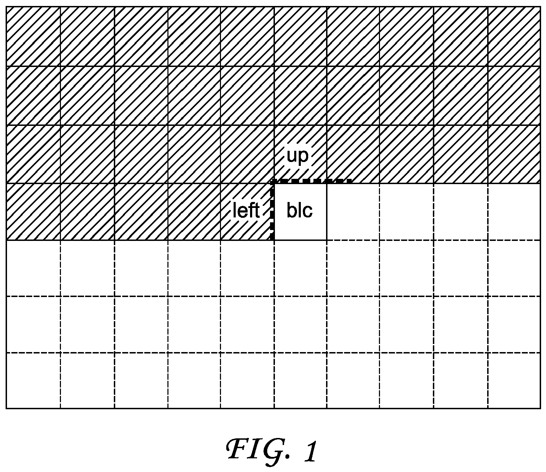

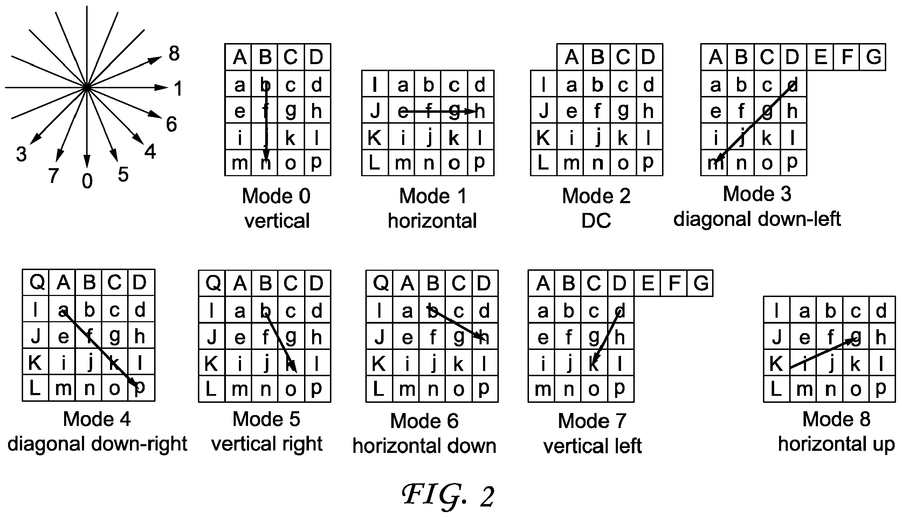

In the H.264 standard, Intra4×4 and Intra8×8 predictions correspond to a spatial estimation of the pixels of the current block to be coded based on the neighboring reconstructed pixels. The current block to be encoded is shown in FIG. 1 as "blc".
In the Intra4×4 mode prediction of H.264, the prediction depends on the reconstructed neighboring pixels as illustrated with FIG. 1. It should be understood that in FIG. 1, "blc" denotes the current block to encode, the hatched zone above and to the left of blc corresponds to the reconstructed pixels or causal zone, the remaining unshaded part of the picture (image) is not yet encoded, and the pixels of left column and top line inside the causal part (shown as black dots adjacent to blc) are used to carry out the spatial prediction for blc.
Concerning the intra 4x4 prediction, the different modes are illustrated in FIG. 2. The H.264 standard specifies different directional prediction modes in order to elaborate the pixels prediction. Nine intra prediction modes, shown as modes 0-8, are defined on 4x4 and 8x8 block sizes of the macroblock (MB). As described in relation to FIG. 2, eight of these directional modes consist of a 1 D directional extrapolation based on the pixels (left column and top line) surrounding the current block to predict. The intra prediction mode 2 (DC mode) defines the predicted block pixels as the average of available surrounding pixels.
Exemplary 4x4 predictions are carried out as follows:

•   In the mode 1 (horizontal), the pixels "e", "f", "g", and "h" are predicted with the reconstructed pixel "J" (left column).
•   In the mode 5, for example, "a" is predicted by $(Q+A+1)/2$, and "g" and "p" are predicted by $(A+2B+C+2)/4$.

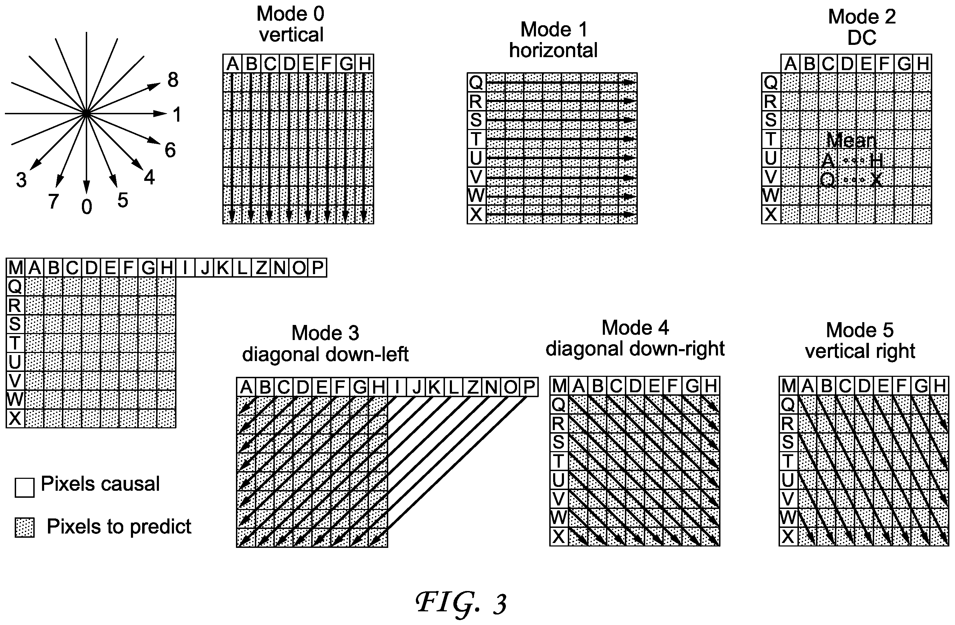

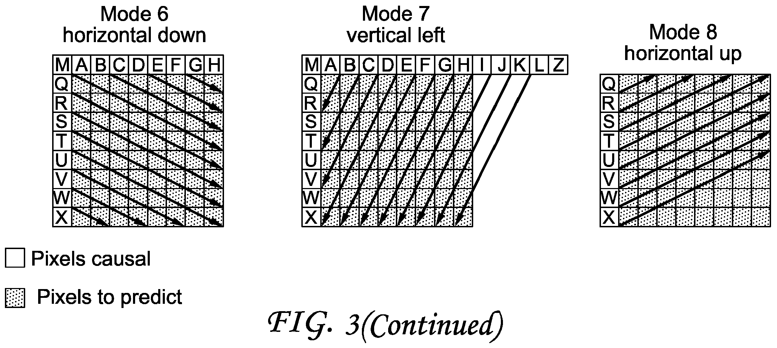

FIG. 3 illustrates the principle of Intra 8x8 predictions. These 8x8 predictions are carried out as follows, for example:

•   Let "$p_{rd}(i,j)$" denotes the pixels to predict the current block and the coordinates (i,j) denotes line (row) and column in the block so that the first pixel in the block is on the top row in the leftmost column in the current block and it is denoted by indices (0,0).
•   In the mode 1 (horizontal), for example, the pixels $p_{rd}(0,0)$, $p_{rd}(0,1)$, ... and $p_{rd}(0,7)$ are predicted with the reconstructed "Q" pixel.
•   In the mode 5, for example, $p_{rd}(0,0)$ is predicted by $(M+A+1)/2$, and both $p_{rd}(1,2)$ and $p_{rd}(3,3)$ are predicted by $(A+2B+C+2)/4$.

The chroma samples of a macroblock are predicted using a similar prediction technique as for the luma component in Intra 16x16 macroblocks. Four prediction modes are supported. Prediction mode 0 is a vertical prediction mode, mode 1 is a horizontal prediction mode, and mode 2 is a DC prediction mode. These prediction modes are specified similar to the modes in Intra 4x4.
The intra prediction is then performed using the different prediction directions. After the residue, which is the difference between the current block and the predicted block, is frequency transformed using a technique such as Discrete Cosine Transform. It is then quantized and entropy encoded before finally being sent out.
Prior to encoding, the best prediction mode is selected from the nine prediction modes available. For direction prediction, the Sum of Absolute Difference measure (SAD) can be used, for example. This measure is computed between the current block to encode and the block predicted. The prediction mode is encoded for each sub partition.

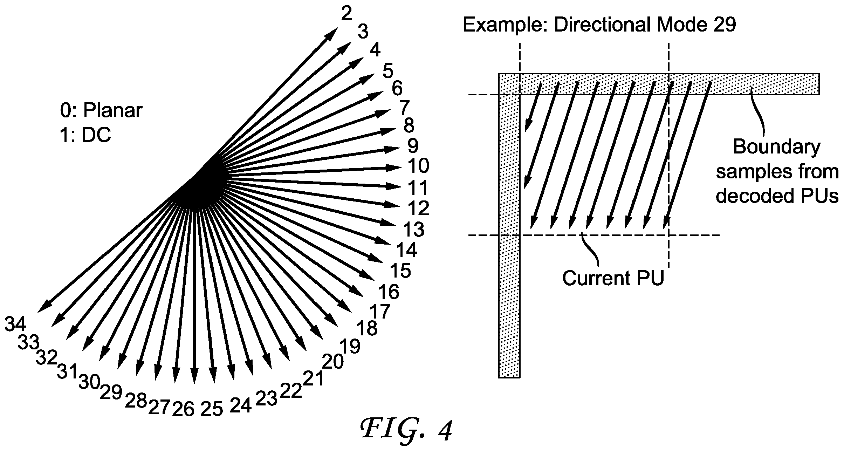

HEVC intra prediction operates according to the block size. Previously decoded boundary samples from spatially neighboring blocks are used to form the prediction signal. Directional prediction with 33 different directional orientations or directional modes is defined for block sizes from 4x4 up to 32x32. The possible prediction directions are shown in FIG. 4. Alternatively, planar prediction and DC prediction can also be used. Planar prediction assumes an amplitude surface with a horizontal and vertical slope derived from the boundaries, whereas DC prediction assumes a flat surface with a value matching the mean value of the boundary samples.

For chroma, the horizontal, vertical, planar, and DC prediction modes can be explicitly signaled. Alternatively, the chroma prediction mode can be indicated to be the same as the luma prediction mode.

The concept of directional prediction modes and mode index shown as described herein above is believed to have been sufficiently developed for the reader in order to proceed with a description of the inventive subject matter.

Intra prediction is a key component of image and video compression methods. Given observations, or known samples in a spatial neighborhood, the goal of intra prediction is to estimate unknown pixels of the block to be predicted.

In the context of scalable HDR video encoding, it is an object of the embodiments disclosed herein to improve the HDR prediction from the base layer $I_b$ dedicated to the current HDR enhancement layer $I_e$. Since the images are tone mapped in the base layer, the prediction from base layer needs to be inverse tone mapped. The methods and apparatus disclosed herein are intended to improve the inter layer prediction LDR to HDR over prior art techniques by locally taking into account the pixels used in the LDR layer for the intra prediction of the LDR block and the homologous pixels in the HDR layer in order to estimate on an inverse tone mapping function and then apply this function to the LDR block in order to produce the inter-layer HDR prediction block. That is, predictive inter-layer determinations, such as from the LDR layer to the HDR layer, are to be based on pixels used in the LDR layer for intra prediction of the LDR block using an intra LDR mode and also based on the homologous pixels in the HDR layer for the intermediate intra prediction block using the same intra LDR mode. The present system and method avoids the use of a predetermined template (i.e., shape) of pixels around the LDR and HDR blocks under consideration.

The techniques described herein are applicable to HDR SNR scalable video coding wherein a tone mapped base layer $I_b$, which is derived by a particular tone mapping operator, is dedicated to the LDR video encoding while a corresponding enhancement layer $I_e$ is dedicated to the HDR video encoding. In this scenario, for the encoding of a current block of a given component $b_{e,i}$ (to encode) of the enhancement layer, where the component $i$ is R, G, or B, for example, it is necessary to find a prediction block extracted from the collocated (i.e., homologous) block in the base layer, $b_{b,i}$. This base layer block is inverse tone mapped using an estimated function to produce the inter-layer prediction block. This inter-layer prediction from the LDR layer to the HDR layer is realized by locally taking into account:

- the pixels used in the LDR layer for the intra prediction block of the LDR block, and

- and the homologous collocated pixels in the HDR layer for the intermediate intra prediction block with the same intra LDR mode,
  in order to estimate on the inverse tone mapping function and then applying this estimated function to the LDR block.

The encoding method and the equivalent encoder apparatus can be understood from the following descriptive overview. For the encoding of any component (e.g., R, G, B) of a given HDR image block of pixels, it is imperative to consider the collocated (and therefore homologous) reconstructed LDR block. If the LDR block is intra coded, the method proceeds by keeping or constructing the LDR intra prediction block that is computed using LDR intra mode $m_b$. The intermediate HDR intra prediction block is then constructed using the same LDR intra mode $m_b$. The transfer function F() is estimated between the LDR intra prediction block and the intermediate intra HDR prediction block. The estimated transfer function F() is then applied to the LDR block of a given component in order to produce the inter-layer prediction block. A prediction error computed between the current block and the inter-layer prediction block is then quantized and encoded for transmission.

In a similar manner, the decoding method and the equivalent decoder apparatus can be understood from the following descriptive overview. A given HDR block of pixels is received for decoding. If the LDR collocated block (i.e., homologous block) is intra coded, then, for any component (e.g., R, G, B) of a given HDR image block of pixels, the intermediate HDR intra prediction block is constructed using the LDR intra mode $m_b$. A transfer function F() is estimated between the LDR intra prediction block and the intermediate intra HDR prediction block. The estimated transfer function F() is then applied to the LDR block of a given component in order to produce the inter-layer prediction block. The prediction error block is computed between the current block and the inter-layer prediction block. Decoding and de-quantization are performed on the prediction error block. Finally, the HDR decoded block is reconstructed by adding the prediction error block to inter layer prediction block.

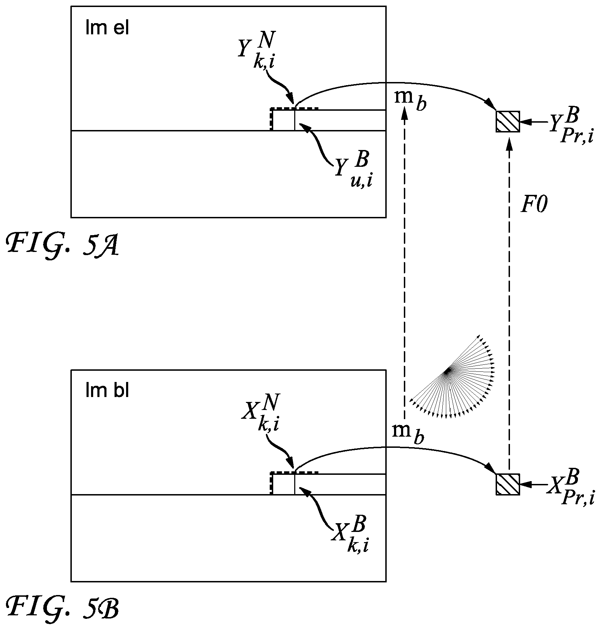

The critical operations for encoding and decoding described above are illustrated in FIG. 5(a) and (b). FIG. 5(a) relates to the image block in the process of reconstruction in the base layer whereas FIG. 5(b) relates to the image block in the process of reconstruction in the enhancement layer. The shaded portions of the image blocks represent the reconstructed part of the block, whereas the unshaded portions represent portions not yet reconstructed.

The notations shown in FIG. 5(b) in relation to the current block of a given i component of the enhancement layer image $I_e$ are:

- The current block to predict for the enhancement layer, which is unknown and shown as an unshaded box, is $Y_{u,i}^B$; and
- The known reconstructed (or decoded) pixels neighboring the current block are $Y_{k,i}^N$ and shown as small neighboring dots.

The subscripted indices $k$, $u$, and i indicate "know", "unknown" and the component index (e.g., $i=r$, $g$, or b), respectively. As such, the current block for encoding is denoted as $Y_u^B = \left\{ Y_{u,g}^B , Y_{u,b}^B , Y_{u,r}^B \right\}$.

The notations shown in FIG. 5(b) in relation to the image of the base layer $I_b$ are:

- The collocated block of the base layer, which is known is $X_{k,i}^B$ - it should be understood that this block is collocated or homologous with the current block in order to predict that block in the enhancement layer; and
- The known reconstructed (or decoded) pixels neighboring the block collocated or homologous with the current block is $X_{k,i}^N$.

The fact that the blocks are referenced as being homologous or collocated means that they are appropriated from substantially identical portions of the block in the enhancement layer and in the base layer.

The goal is to determine a block of prediction for the current enhancement layer block $Y_{u,i}^B$ from the collocated base layer block $X_{k,i}^B$ for each component i. The inter layer prediction is based on the functional transformation F() estimated from the base and enhancement layer intra prediction blocks $X_{Pr,i}^B$ and $Y_{Pr,i}^B$, as shown on the FIG. 5(a) and 5(b).

This transformation F() is based on an offset $o$ and a scale factor s. In case of inter-layer prediction with the intra prediction blocks $X_{Pr,i}^B$ and $Y_{Pr,i}^B$ the transformation $F()$ is given as:

$$F(x) = s \cdot x + o \qquad (1)$$

The scale factor s is obtained by linear regression from the pixels $y$ and $x$ of the enhancement and base layer prediction blocks. Each block is composed of n pixels and the lower case notation indicates a pixel within the block indicated by an uppercase notation. The scale factor s is determined as follows:

$$s = \frac{\overline{x.y} - \bar{x}.\bar{y}}{\overline{x^2} - \bar{x}^2} \qquad (2)$$

where:

$$\overline{xy} = \frac{1}{n} \sum_{j=0}^{n-1} x_j \cdot y_j,$$

$$\overline{x^2} = \frac{1}{n} \sum_{j=0}^{n-1} x_j^2,$$

$$\bar{x} = \frac{1}{n} \sum_{j=0}^{n-1} x_j,$$

$$\bar{y} = \frac{1}{n} \sum_{j=0}^{n-1} y_j,$$

$$x \in X_{Pr,i}^B,$$

$$y \in Y_{Pr,i}^B$$

and j is the index of the pixels inside the blocks. The offset value o is determined as follows:

$$o = \bar{y} - s \cdot \bar{x} \qquad (3)$$

When $F(X)$ is estimated from $X_{Pr,i}^B$ and $Y_{Pr,i}^B$, the prediction $\hat{Y}_{u,i}^B$ of the current block $Y_{u,i}^B$ of the enhancement layer is computed from the block $X_{k,i}^B$ of the base layer as:

$$\hat{y} = F(x) = s.x + o \qquad (4)$$

where $x \in X_{k,i}^B$ and $\hat{y} \in \hat{Y}_{u,i}^B$.

A block of the prediction residual $Y_{u,i}^{Ber}$ is computed using the current block and the prediction of the current block as follows:

$$Y_{u,i}^{Ber} = Y_{u,i}^B - \hat{Y}_{u,i}^B \quad (5)$$

A transform such as Discrete Cosine Transform (DCT) is then applied to the block $Y_{u,i}^{Ber}$ of prediction residual resulting in the transformed coefficients:

$$r_e = DCT(Y_{u,i}^{Ber}) \quad (6)$$

Finally, the transformed coefficients $r_e$ can be quantized as $r_{eq}$ before being entropy encoded and sent in the bitstream. In order to be re-used for inter image, intra image, and inter-layer prediction, the block is locally reconstructed from the dequantized prediction error $r_{edq}$ and added to the prediction $\hat{Y}_{u,i}^B$ to produce the reconstructed (or decoded) block $Y_{k,i}'^B$, where the superscript "'" is intended to mean "reconstructed" or "decoded" and the subscript "k" indicates that the block $Y_{k,i}'^B$ is now known at the coder or decoder side.

In employing the techniques of the subject method, it is apparent that an advantage gained from estimating the parameters of the transfer function F(), which is based on the pixels used in the LDR layer for the intra prediction and the homologous ones in the HDR layer and the entire blocks of prediction, namely, the LDR prediction block and the intermediate HDR prediction block, comes from the use of extrapolated pixels given by the spatial intra extrapolation prediction mode of for example H.264 and HEVC and the impact of the "good" extrapolated pixels inside the prediction blocks in the estimation of the parameters of the F() function (*see Eqs. 1, 2, and 3*), instead of only the neighboring pixels as prescribed by the prior art.

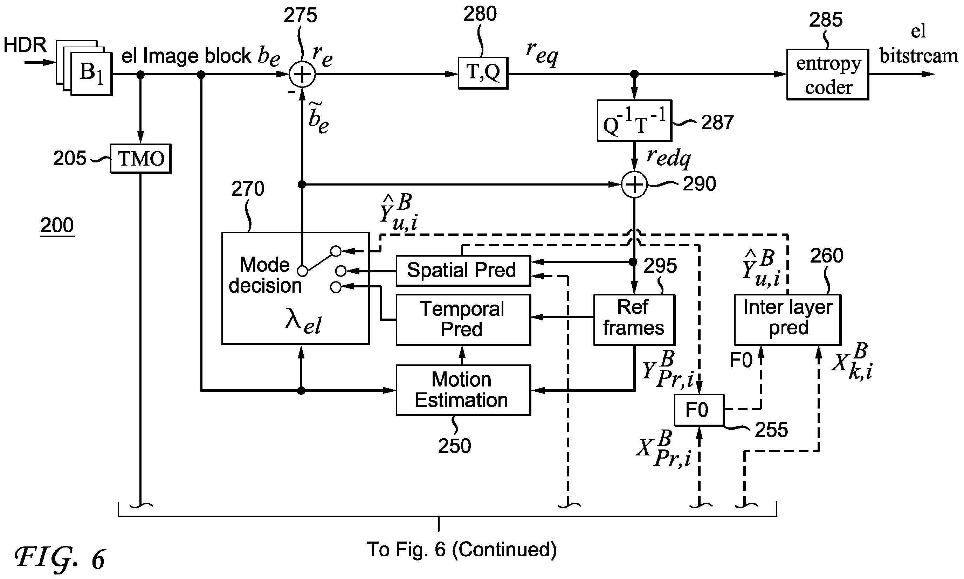

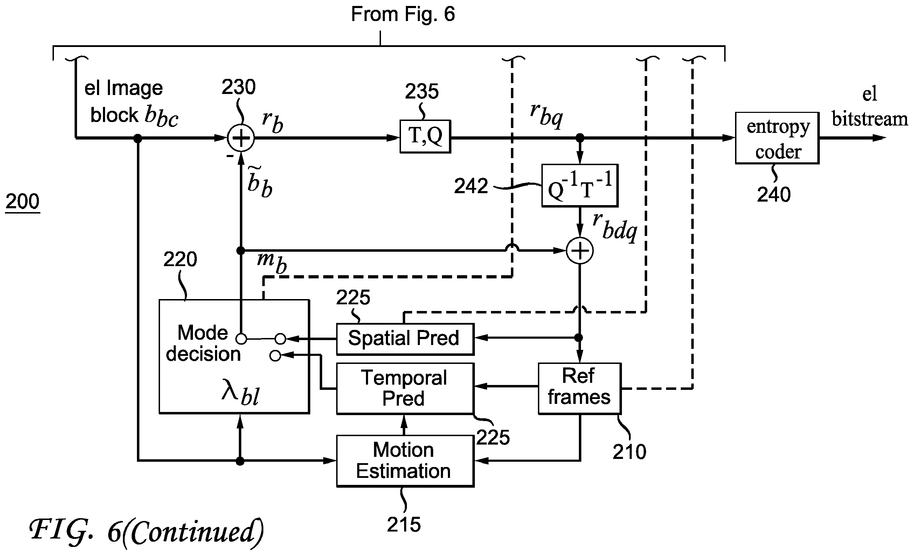

FIG. 6 is a schematic block diagram illustrating an exemplary embodiment of a coder realized in accordance with the principles in the present disclosure. An example of a scalable coding process will be described with reference to FIG. 6.

As shown in FIG. 6, the coder 200 generally comprises two parts, one is the first coder elements 205-245 for coding the base layer and the other is the second coder elements 250-295 for coding the enhancement layer.

The encoder encodes a sequence of HDR image blocks be into a sequence of blocks of pixels in each of a base layer and an enhancement layer. An original image block be of HDR enhancement layer (el) is tone mapped by the Tone Mapping Operator 205 (TMO) to generate an original tone mapped image block $b_{bc}$ of LDR base layer (bl). The original image block be of HDR enhancement layer may have been stored in a buffer or storage device of the apparatus.

As described below, the first coder elements 205-245 perform a first encoding, in the base layer, of a tone mapped representation of an HDR image block $b_{bc}$ into a base layer residual error block $r_b$ included in the sequence of blocks for the base layer, while in an intra image prediction mode identified by a mode index $m_b$ included in a plurality of mode indices, wherein this first encoding is configured for producing at least a reconstructed base layer block $X_{k,i}^B$ and a base layer intra prediction block $\tilde{b}_b$ also shown as $X_{Pr,i}^B$.

With the original image block $b_{bc}$ of the LDR base layer and the previously decoded images stored in the reference frames buffer 210, the motion estimator 215 determines the best image prediction image block $\tilde{b}_b$ with the mode index $m_b$.

When the element 220 for mode decision process selects the image prediction image block from spatial predictor 225, the residual prediction error $r_b$ is computed with the difference between the original image block $b_{bc}$ and the intra prediction image block $\tilde{b}_b$ by the combiner 230.

The residual prediction error $r_b$ is transformed via discrete cosine transform and quantized by the transformer/quantizer 235, then the output $r_{bq}$ from element 235 is entropy coded by the entropy coder 240 and sent for transmission in the base layer bit stream. Additionally, the decoded block $b_b$ is locally reconstructed by adding the inverse transformed and quantized prediction error $r_b$ generated by the inverse transformer/dequantizer 242 to the prediction image block $\tilde{b}_b$ in combiner 245. The reconstructed (or decoded) frame is stored in the base layer reference frames buffer 210.

It should be noted that, according to the present embodiment, the structure of the second coder elements 250-295 in the enhancement layer, except for elements 255-260, are operationally the same as the first coder elements 210-245 in the base layer. The second coder elements perform a second encoding, in the enhancement layer, of the HDR image block be into an enhancement layer residual error block re included in the sequence of blocks for the enhancement layer, wherein this second encoding is performed with the same mode index $m_b$ from the base layer encoding, and wherein this second encoding is configured for producing at least an intermediate enhancement layer intra prediction block $Y_{Pr,i}^B$ homologous with said base layer intra prediction block. The second encoding further comprises: estimating a transfer function F() between the intermediate enhancement layer intra prediction block $Y_{Pr,i}^B$ and the base layer intra prediction block $\tilde{b}_b$ also shown as $X_{Pr,i}^B$; computing an inter-layer prediction block $\hat{Y}_{u,i}^B$ by applying the estimated transfer function to the reconstructed base layer block $X_{k,i}^B$; and determining the enhancement layer residual error block re as a difference between the HDR image block be and the inter-layer prediction block $\tilde{b}e$

The block $b_b$ of the LDR base layer $l_b$ is coded in intra image mode in this example. The mode index $m_b$ used for the collocated block $b_b$ of the LDR base layer is utilized for the current block of the HDR enhancement layer. With this mode index $m_b$, the motion compensator 250 determines the prediction block $\tilde{b}e$ at the HDR enhancement layer level and the motion compensator 215 determines the prediction block $\tilde{b}_b$ at the LDR base layer level.

The transfer function F() estimator 255 estimates the transfer function F() between the intermediate enhancement layer intra prediction block $Y_{Pr,i}^B$ and the base layer intra prediction block $\tilde{b}_b$ also shown as $X_{Pr,i}^B$. Inter-layer prediction element 260 computes an inter-layer prediction block $\hat{Y}_{u,i}^B$ by applying the estimated transfer function to the reconstructed base layer block $X_{k,i}^B$.

The HDR enhancement layer residue (residual prediction error) re is computed with the difference between the original enhancement layer image block be and the HDR enhancement layer (inter-layer) prediction block $\hat{Y}_{u,i}^B$, also shown as $\tilde{b}e$, by the combiner 275. The HDR enhancement layer residue (residual prediction error) re is transformed and quantized by the transformer/quantizer 280 into req. Then, the quantized HDR enhancement layer residue (residual prediction error) req is entropy coded by the entropy coder 285 and sent in the enhancement layer bit stream.

Finally, the decoded block be is locally rebuilt by adding the inverse transformed and quantized prediction error re from the inverse transformer/dequantizer 287 ($r_{edq}$) to the HDR enhancement layer (inter layer) prediction block $\tilde{b}e$ by the combiner 290. The reconstructed (or decoded) image is stored in the enhancement layer reference frames buffer 295.

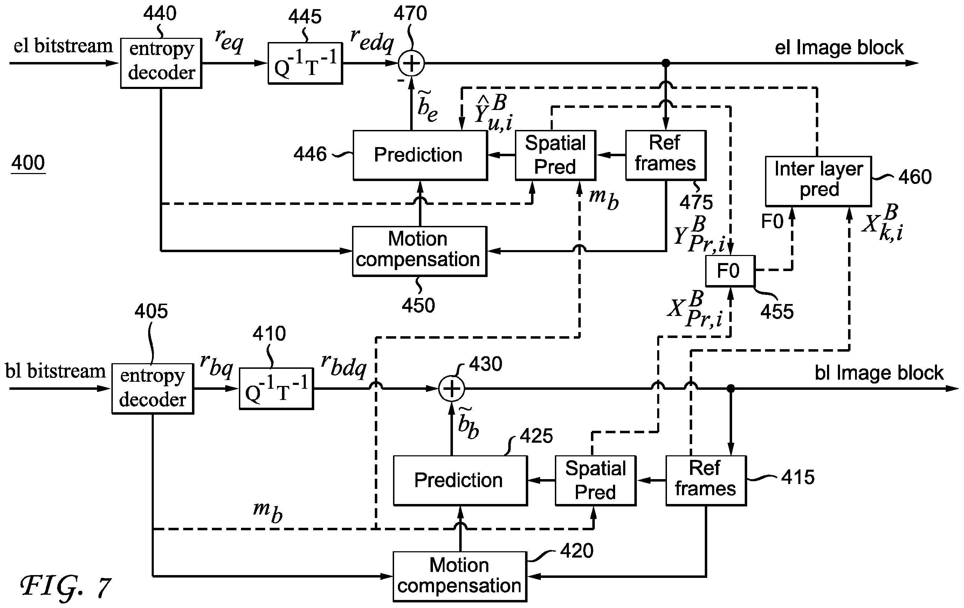

FIG. 7 is a schematic block diagram illustrating an example of a decoder according to an embodiment of the present disclosure. An example of a scalable decoding process will be described with reference to FIG. 7.

As shown in FIG. 7, the decoder 400 generally comprises two parts, one is the first decoder elements 405-430 for decoding the base layer and the other is the second coder elements 440-475 for decoding the enhancement layer. The decoder decodes at least an enhancement layer bitstream of an image into a sequence of enhancement layer image blocks. The decoder can also decode a base layer bitstream of an image into a sequence of base layer image blocks. The decoder is configured to receive the enhancement layer bitstream and the corresponding base layer bitstream.

First decoder elements 405-430 perform a first decoding, in the base layer, of the base layer bitstream while in an intra image prediction mode identified by a mode index $m_b$ included in a plurality of mode indices, for producing at least a reconstructed base layer block $X_{k,i}^B$ and a base layer intra prediction block $\tilde{b}_b$ also shown as $X_{Pr,i}^B$.

In decoding on base layer (bl), the base layer (bl) bitstream is input to the entropy decoder 405. From the base layer bitstream, for a given block, the entropy decoder 405 decodes the transformed and quantized prediction error $r_{bq}$ and the associated mode index $m_b$. The base layer (bl) bitstream may be provided to, or received by, the decoder 400 from an external source in which it has been stored through communications or transmission or from a computer readable storage medium on which it has been recorded.

The decoded residual prediction error $r_{bq}$ is inverse transformed and dequantized by the inverse transformer/dequantizer 410. With the reference image stored in and provided from the base layer reference frames buffer 415 and the mode index $m_b$ provided from the entropy decoder 405, the motion compensator 420 determines the intra image prediction block $\tilde{b}_b$.

The reconstructed (or decoded) base layer image block is locally rebuilt by adding the inverse transformed and dequantized prediction error $r_{bdq}$ to the intra image prediction block $\tilde{b}_b$ by the combiner 430. The reconstructed (or decoded) frame is stored in the base layer reference frames buffer 415, which reconstructed (or decoded) frames being used for the next base layer inter image prediction.

Second coder elements 440-475 perform a second decoding, in the enhancement layer, on the enhancement layer bitstream based on said mode index $m_b$ to produce at least an intermediate enhancement layer intra prediction block $Y_{Pr,i}^B$ homologous with the base layer intra prediction block $\tilde{b}_b$ also shown as $X_{Pr,i}^B$. The second decoding further comprises: estimating a transfer function F() between the intermediate enhancement layer intra prediction block $Y_{Pr,i}^B$ and the base layer intra prediction block $\tilde{b}_b$; computing an inter-layer prediction block $\hat{Y}_{u,i}^B$ by applying the estimated transfer function F() to the reconstructed base layer block $X_{k,i}^B$; and determining the reconstructed enhancement layer image block by adding the inter-layer prediction block $\tilde{b}_e$ to a reconstructed enhancement layer prediction error block $r_{edq}$ based on the received enhancement layer bitstream (el bitstream).

It should be noted that, according to the present embodiment, the structure of the second coder elements 440-475 for enhancement layer, except for elements 455-460, are the same as the first coder elements 405-430 for base layer.

The enhancement layer (el) bitstream is input to the entropy decoder 440. From the enhancement bitstream, for a given block, the entropy decoder 440 decodes the transformed and quantized prediction error (req). The enhancement layer (el) bitstream may be provided to, or received by, the decoder 440 from an external source in which it has been stored through communications or transmission or from a computer readable storage medium on which it has been recorded.

The residual prediction error $r_{eq}$ is inverse transformed and dequantized ($r_{edq}$) by the inverse transformer/dequantizer 445.

If the coding mode of the block be to decode corresponds to the intra mode, then the mode index $m_b$ of the collocated block $b_b$ of the LDR base layer can be considered for decoding the block be of the HDR enhancement layer.

With this mode index $m_b$, the motion compensator 450 determines the prediction block $\tilde{b}_e$ at the HDR enhancement layer level and the motion compensator 420 determines the prediction block $\tilde{b}_b$ at the LDR base layer level.

The transfer function F() estimator 455 estimates the transfer function F() between the intermediate enhancement layer intra prediction block $Y_{Pr,i}^B$ and the base layer intra prediction block $\tilde{b}_b$ also shown as $X_{Pr,i}^B$. Inter-layer prediction element 460 computes an inter-layer prediction block $\widehat{Y}_{u,i}^B$ by applying the estimated transfer function F() to the reconstructed base layer block $X_{k,i}^B$.

The reconstructed (or decoded) enhancement layer block is built, by adding the inverse transformed and dequantized prediction error block $r_{edq}$ to the base layer intra prediction block $\tilde{b}_b$ also shown as $X_{Pr,i}^B$ by the combiner 470. The reconstructed (or decoded) frame is stored in the enhancement layer reference frames buffer 475, which reconstructed (or decoded) frames being used for the next enhancement layer inter image prediction.

In case spatial scalability - spatial inter-layer of given scale factor Sc - one solution consists of interpolating, with the Sc scale factor, the base layer intra prediction block $\left(X_{Pr,i}^B\right)$ given the up-sampled prediction block $X_{Pr,i}^{Bup}$, and computing the transfer function F() between the intermediate intra HDR prediction block $\left(Y_{Pr,i}^B\right)$ and the up-sampled block $X_{Pr,i}^{Bup}$ using the Eqs. 1, 2, and 3. The definitive prediction is built by applying the transfer function F() to the reconstructed and up-sampled base layer block $X_{k,i}^{Bup}$.

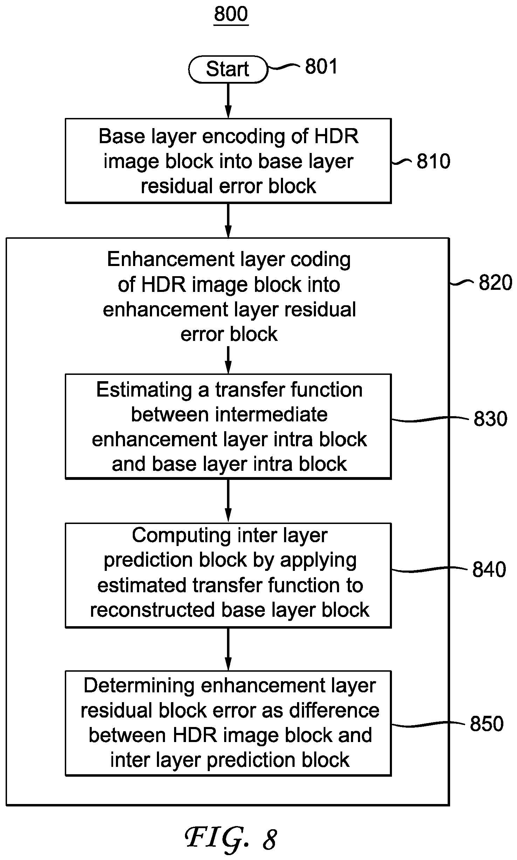

One embodiment of a method 800 for encoding a sequence of HDR image blocks into a sequence of blocks of pixels in each of a base layer and an enhancement layer is shown in Figure 8. The method comprises first encoding, in the base layer, a tone mapped representation of an HDR image block into a base layer residual error block included in the sequence of blocks for the base layer, while in an intra image prediction mode identified by a mode index included in a plurality of mode indices, the first encoding configured for producing at least a reconstructed base layer block and a base layer intra prediction block. The method also comprises a second encoding, in the enhancement layer, of the HDR image block into an enhancement layer residual error block included in the sequence of blocks for the enhancement layer, the second encoding being performed with the mode index, the second encoding configured for producing at least an intermediate enhancement layer intra prediction block homologous with the base layer intra prediction block. The second encoding further comprises estimating a transfer function between the intermediate enhancement layer intra prediction block and the base layer intra prediction block, computing an inter-layer prediction block by applying the estimated transfer function to the reconstructed base layer block, and determining the enhancement layer residual error block as a difference between the HDR image block and the inter-layer prediction block.

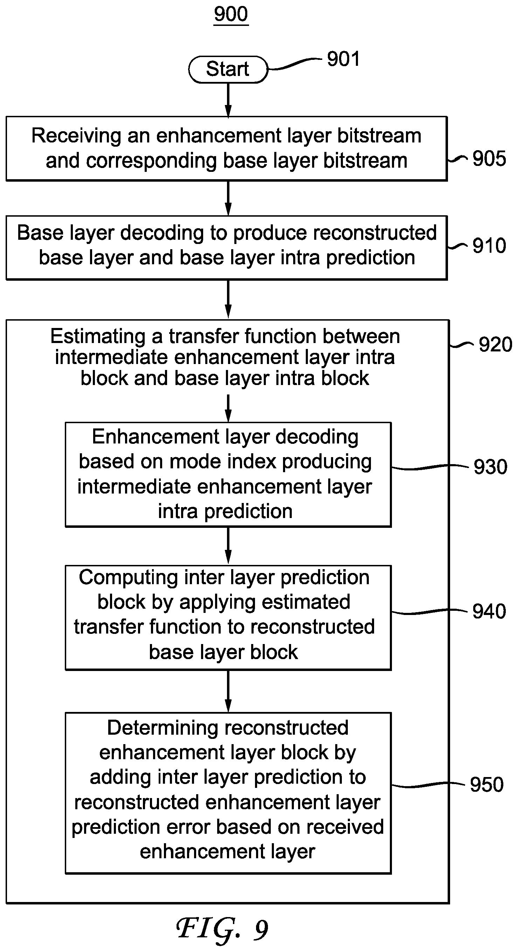

Figure 9 shows one embodiment of a method for decoding at least an enhancement layer bitstream of an image into a sequence of enhancement layer image blocks, the method comprising receiving the enhancement layer bitstream and a corresponding base layer bitstream and first decoding, in the base layer, the base layer bitstream while in an intra image prediction mode identified by a mode index included in a plurality of mode indices, for producing at least a reconstructed base layer block and a base layer intra prediction block. The method further comprises a second decoding, in the enhancement layer, of the enhancement layer bitstream based on the mode index to produce at least an intermediate enhancement layer intra prediction block homologous with the base layer intra prediction block, the second decoding further comprising estimating a transfer function between the intermediate enhancement layer intra prediction block and the base layer intra prediction block,

computing an inter-layer prediction block by applying the estimated transfer function to the reconstructed base layer block, and determining the reconstructed enhancement layer block by adding the inter-layer prediction block to a reconstructed enhancement layer prediction error block based on the received enhancement layer bitstream.

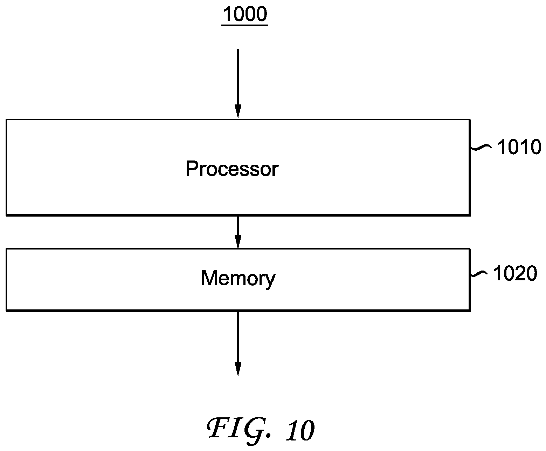

Figure 10 shows one embodiment of an apparatus for performing the embodiments of at least Figures 8 or 9. The apparatus comprises a memory in communication with a processor, configured to perform the steps of Figures 8 or 9.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and nonvolatile storage. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

Having described various embodiments for a method for improving intra frame prediction in digital video compression when reference samples are missing or unavailable, it is noted that modifications and variations of the method can be made by persons skilled in the art in light of the above teachings. It is therefore to be understood that changes may be made in the particular embodiments of the invention disclosed which are within the scope and spirit of the invention. While the forgoing is directed to various embodiments of the present invention, other and further embodiments of the invention may be devised without departing from the basic scope thereof.

## Claims

1. A method for encoding a sequence of HDR image blocks into a sequence of blocks of pixels in each of a base layer and an enhancement layer, the method comprising:

   first encoding (810), in the base layer, a tone mapped representation of an HDR image block into a base layer residual error block included in the sequence of blocks for the base layer, while in an intra image prediction mode identified by a mode index included in a plurality of mode indices, said first encoding configured for producing at least a reconstructed base layer block and a base layer intra prediction block; and
   second encoding (820), in the enhancement layer, the HDR image block into an enhancement layer residual error block included in the sequence of blocks for the enhancement layer, said second encoding being performed with said mode index, said second encoding configured for producing at least an intermediate enhancement layer intra prediction block homologous with said base layer intra prediction block, said second encoding further comprising:

      estimating (830) a transfer function between the intermediate enhancement layer intra prediction block and the base layer intra prediction block;
      computing (840) an inter-layer prediction block by applying the estimated transfer function to the reconstructed base layer block; and determining (850) the enhancement layer residual error block as a difference between the HDR image block and the inter-layer prediction block.

2. The method of claim 1 comprising forming a base layer output bitstream of the base layer residual error for transmission by:

   applying a discrete cosine transform to the base layer residual error;
   quantizing said transformed base layer residual error; and
   entropy encoding said quantized transformed base layer residual error to produce said base layer output bitstream; and
   and said method further comprising forming an enhancement layer output bitstream of the enhancement layer residual error for transmission applying a discrete cosine transform to the enhancement layer residual error;
   quantizing said transformed enhancement layer residual error; and
   entropy encoding said quantized transformed enhancement layer residual error to produce said enhancement layer output bitstream.

3. The method of claim 1 further including tone mapping the HDR image block, in accordance with a prescribed tone mapping operator, to produce said tone mapped representation of the HDR image block for use in said first encoding.

4. The method of claim 2 further comprising:

inverse transforming and inverse quantizing said quantized transformed enhancement layer residual error to produce a first output; adding the inter-layer prediction block to the first output to form a reconstructed enhancement layer image block; and storing the reconstructed enhancement layer block in an enhancement layer buffer.

5. Apparatus for encoding a sequence of HDR image blocks into a sequence of blocks of pixels in each of a base layer and an enhancement layer, the apparatus comprising:

a base layer encoder configured for encoding, in the base layer, a tone mapped representation of an HDR image block into a base layer residual error block included in the sequence of blocks for the base layer, while in an intra image prediction mode identified by a mode index included in a plurality of mode indices, said base layer encoder further configured for producing at least a reconstructed base layer block and a base layer intra prediction block; and an enhancement layer encoder configured for encoding, in the enhancement layer, the HDR image block into an enhancement layer residual error block included in the sequence of blocks for the enhancement layer, said second encoding being performed with said mode index, said enhancement layer encoder configured for producing at least an intermediate enhancement layer intra prediction block homologous with said base layer intra prediction block, said enhancement layer encoder further configured for:

estimating a transfer function between the intermediate enhancement layer intra prediction block and the base layer intra prediction block; computing an inter-layer prediction block by applying the estimated transfer function to the reconstructed base layer block; and determining the enhancement layer residual error block as a difference between the HDR image block and the inter-layer prediction block.

6. The apparatus of claim 5 configured to perform the method of any one of claims 1 to 4.

7. A method for decoding at least an enhancement layer bitstream of an image into a sequence of enhancement layer image blocks, the method comprising:

receiving (905) said enhancement layer bitstream and a corresponding base layer bitstream; first decoding (910), in the base layer, said base layer bitstream while in an intra image prediction mode identified by a mode index included in a plurality of mode indices, for producing at least a reconstructed base layer block and a base layer intra prediction block; and second decoding (920), in the enhancement layer, said enhancement layer bitstream based on said mode index to produce at least an intermediate enhancement layer intra prediction block homologous with said base layer intra prediction block, said second decoding further comprising:

estimating (930) a transfer function between the intermediate enhancement layer intra prediction block and the base layer intra prediction block; computing (940) an inter-layer prediction block by applying the estimated transfer function to the reconstructed base layer block; and determining (950) the reconstructed enhancement layer block by adding the inter-layer prediction block to a reconstructed enhancement layer prediction error block based on the received enhancement layer bitstream.

8. The method of claim 7 comprising:

entropy decoding said received enhancement layer bitstream; inverse quantizing and inverse discrete cosine transforming the entropy decoded received enhancement layer bitstream to produce the reconstructed enhancement layer prediction error block.

9. The method of claim 7 comprising:

entropy decoding said received base layer bitstream; inverse quantizing and inverse discrete cosine transforming the entropy decoded received base layer bitstream to produce the reconstructed base layer prediction error block; and determining the reconstructed base layer block by adding the base layer prediction block to the reconstructed base layer prediction error block.

10. The method of claim 1, 7 or 9 further comprising storing the reconstructed base layer block in a base layer buffer.

11. The method of claim 7 or 10 further comprising:

storing the reconstructed enhancement layer block in an enhancement layer buffer.

12. Apparatus for decoding at least an enhancement layer bitstream of an image into a sequence of enhancement layer image blocks, the apparatus comprising:

an input element configured for receiving said enhancement layer bitstream and a corresponding base layer bitstream;
a base layer decoder configured for decoding, in the base layer, said base layer bitstream while in an intra image prediction mode identified by a mode index included in a plurality of mode indices, to produce at least a reconstructed base layer block and a base layer intra prediction block; and
an enhancement layer decoder configured for decoding, in the enhancement layer, said enhancement layer bitstream based on said mode index to produce at least an intermediate enhancement layer intra prediction block homologous with said base layer intra prediction block, said enhancement layer decoder further configured for:

estimating a transfer function between the intermediate enhancement layer intra prediction block and the base layer intra prediction block;
computing an inter-layer prediction block by applying the estimated transfer function to the reconstructed base layer block; and
determining the reconstructed enhancement layer block by adding the inter-layer prediction block to a reconstructed enhancement layer prediction error block based on the received enhancement layer bitstream.

13. The apparatus of claim 12, comprising:

an entropy decoder for entropy decoding said received enhancement layer bitstream;
an inverse quantizer and an inverse discrete cosine unit for inverse quantizing and transforming the entropy decoded received enhancement layer bitstream to produce the reconstructed enhancement layer prediction error block.

14. The apparatus of claim 12 comprising:

an entropy decoder for entropy decoding said received base layer bitstream;
an inverse quantizer and an inverse discrete cosine unit for inverse quantizing and inverse discrete cosine transforming the entropy decoded received base layer bitstream to produce the reconstructed base layer prediction error block; and
a processor for determining the reconstructed base layer block by adding the base layer prediction block to the reconstructed base layer prediction error block..

15. A nontransitory computer readable medium having one or more executable instructions stored thereon, which when executed by a processor cause the processor to perform a method according to one of Claims 1-4 or 7-10.

16. A signal produced by performing the method according to one of Claims 1 - 4 or Claim 7-11.

FIG. 1

Mode 3
diagonal down-left

Mode 2
DC

Mode 1
horizontal

Mode 0
vertical

Mode 8
horizontal up

Mode 7
vertical left

Mode 6
horizontal down

Mode 5
vertical right

Mode 4
diagonal down-right

*FIG. 2*

FIG. 3

EP 3 301 925 A1

**Mode 6**
**horizontal down**

| M | A | B | C | D | E | F | G | H |
|---|---|---|---|---|---|---|---|---|
| Q | | | | | | | | |
| R | | | | | | | | |
| S | | | | | | | | |
| T | | | | | | | | |
| U | | | | | | | | |
| V | | | | | | | | |
| W | | | | | | | | |
| X | | | | | | | | |

**Mode 7**
**vertical left**

| M | A | B | C | D | E | F | G | H | I | J | K | L | Z |
|---|---|---|---|---|---|---|---|---|---|---|---|---|---|
| Q | | | | | | | | | | | | | |
| R | | | | | | | | | | | | | |
| S | | | | | | | | | | | | | |
| T | | | | | | | | | | | | | |
| U | | | | | | | | | | | | | |
| V | | | | | | | | | | | | | |
| W | | | | | | | | | | | | | |
| X | | | | | | | | | | | | | |

**Mode 8**
**horizontal up**

| Q | | | | | | | | |
|---|---|---|---|---|---|---|---|---|
| R | | | | | | | | |
| S | | | | | | | | |
| T | | | | | | | | |
| U | | | | | | | | |
| V | | | | | | | | |
| W | | | | | | | | |
| X | | | | | | | | |

☐ Pixels causal

▧ Pixels to predict

*FIG. 3(Continued)*

0: Planar
1: DC

Example: Directional Mode 29

Boundary samples from decoded PUs

Current PU

*FIG. 4*

Im el

$Y_{k,i}^{N}$

$Y_{u,i}^{B}$

$m_b$

$Y_{Pr,i}^{B}$

$F0$

FIG. 5A

Im bl

$X_{k,i}^{N}$

$X_{k,i}^{B}$

$m_b$

$X_{Pr,i}^{B}$

FIG. 5B

FIG. 6

To Fig. 6 (Continued)

EP 3 301 925 A1

FIG. 6(Continued)

EP 3 301 925 A1

*FIG. 7*

EP 3 301 925 A1

800

Start ⟩—801

Base layer encoding of HDR
image block into base layer
residual error block ⟍— 810

Enhancement layer coding
of HDR image block into
enhancement layer residual
error block ⟍— 820

Estimating a transfer function
between intermediate
enhancement layer intra block
and base layer intra block ⟍— 830

Computing inter layer
prediction block by applying
estimated transfer function to
reconstructed base layer block ⟍— 840

Determining enhancement layer
residual block error as difference
between HDR image block and
inter layer prediction block ⟍— 850

*FIG. 8*

## 900

Start — 901

Receiving an enhancement layer bitstream and corresponding base layer bitstream — 905

Base layer decoding to produce reconstructed base layer and base layer intra prediction — 910

Estimating a transfer function between intermediate enhancement layer intra block and base layer intra block — 920

Enhancement layer decoding based on mode index producing intermediate enhancement layer intra prediction — 930

Computing inter layer prediction block by applying estimated transfer function to reconstructed base layer block — 940

Determining reconstructed enhancement layer block by adding inter layer prediction to reconstructed enhancement layer prediction error based on received enhancement layer — 950

*FIG. 9*

1000

Processor — 1010

Memory — 1020

FIG. 10

Europäisches
Patentamt

European
Patent Office

Office européen
des brevets

## EUROPEAN SEARCH REPORT

Application Number

EP 16 30 6277

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/053519 A1 (FRAUNHOFER GES ZUR FÖRDERUNG DER ANGEWANDTEN FORSCHUNG E V [DE]) 10 April 2014 (2014-04-10) * page 22, line 32 - page 23, line 16; Figs. 9, 11 * | 1-16 | INV. H04N19/30 H04N19/593 H04N19/625 |
| X | WU Y ET AL: "CE1: SVC study on inter-layer prediction: bit-depth scalability", 25. JVT MEETING; 82. MPEG MEETING; 21-10-2007 - 26-10-2007; SHENZHEN,CN; (JOINT VIDEO TEAM OF ISO/IEC JTC1/SC29/WG11 AND ITU-T SG.16 ),, no. JVT-Y081, 21 October 2007 (2007-10-21), XP030007285, ISSN: 0000-0137 * abstract * | 1-16 | |
| A | WINKEN M ET AL: "CE2: SVC bit-depth scalability", 24. JVT MEETING; 81. MPEG MEETING; 29-6-2007 - 5-7-2007; GENEVA, CH;(JOINT VIDEO TEAM OF ISO/IEC JTC1/SC29/WG11 AND ITU-T SG.16 ),, no. JVT-X057, 4 July 2007 (2007-07-04), XP030007164, ISSN: 0000-0082 * the whole document * | 1-16 | TECHNICAL FIELDS SEARCHED (IPC) H04N |
| A | US 8 432 968 B2 (YE YAN [US] ET AL) 30 April 2013 (2013-04-30) * abstract * * page 14, line 25 - page 17, line 8 * * figures 2-4 * | 1-16 | |

-/--

The present search report has been drawn up for all claims

| Place of search | Date of completion of the search | Examiner |
|---|---|---|
| Munich | 1 March 2017 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 30 6277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 051 529 A1 (THOMSON LICENSING [FR]) 22 April 2009 (2009-04-22) * abstract * * paragraphs [0054], [0055] * * figure 2 * ----- | 1-16 | |
| A | ZHANG YANG ET AL: "High dynamic range video compression by intensity dependent spatial quantization in HEVC", 2013 PICTURE CODING SYMPOSIUM (PCS), IEEE, 8 December 2013 (2013-12-08), pages 353-356, XP032567000, DOI: 10.1109/PCS.2013.6737756 [retrieved on 2014-02-11] * the whole document * ----- | 1-16 | |
| E | EP 3 113 492 A1 (THOMSON LICENSING) 4 January 2017 (2017-01-04) * abstract * * paragraphs [0022] - [0024], [0069], [0070] * ----- | 1-16 | |

TECHNICAL FIELDS
SEARCHED (IPC)

The present search report has been drawn up for all claims

| Place of search | Date of completion of the search | Examiner |
|---|---|---|
| Munich | 1 March 2017 | Fassnacht, Carola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6277

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2017

| Patent document cited in search report | | Publication date | Patent family member(s) | | Publication date |
|---|---|---|---|---|---|
| WO 2014053519 | A1 | 10-04-2014 | CN | 104904207 A | 09-09-2015 |
| | | | CN | 105009577 A | 28-10-2015 |
| | | | CN | 105052132 A | 11-11-2015 |
| | | | CN | 105052133 A | 11-11-2015 |
| | | | CN | 105052134 A | 11-11-2015 |
| | | | EP | 2904783 A1 | 12-08-2015 |
| | | | EP | 2904785 A1 | 12-08-2015 |
| | | | EP | 2904786 A1 | 12-08-2015 |
| | | | EP | 2904801 A1 | 12-08-2015 |
| | | | EP | 2904803 A1 | 12-08-2015 |
| | | | JP | 2015536104 A | 17-12-2015 |
| | | | JP | 2015536105 A | 17-12-2015 |
| | | | JP | 2015536106 A | 17-12-2015 |
| | | | JP | 2015537412 A | 24-12-2015 |
| | | | JP | 2015537413 A | 24-12-2015 |
| | | | KR | 20150064163 A | 10-06-2015 |
| | | | KR | 20150070205 A | 24-06-2015 |
| | | | KR | 20150070210 A | 24-06-2015 |
| | | | KR | 20150076180 A | 06-07-2015 |
| | | | KR | 20150076184 A | 06-07-2015 |
| | | | US | 2015195566 A1 | 09-07-2015 |
| | | | US | 2016014412 A1 | 14-01-2016 |
| | | | US | 2016014416 A1 | 14-01-2016 |
| | | | US | 2016014425 A1 | 14-01-2016 |
| | | | US | 2016014430 A1 | 14-01-2016 |
| | | | WO | 2014053512 A1 | 10-04-2014 |
| | | | WO | 2014053514 A1 | 10-04-2014 |
| | | | WO | 2014053517 A1 | 10-04-2014 |
| | | | WO | 2014053518 A1 | 10-04-2014 |
| | | | WO | 2014053519 A1 | 10-04-2014 |
| US 8432968 | B2 | 30-04-2013 | CN | 101828399 A | 08-09-2010 |
| | | | EP | 2213100 A1 | 04-08-2010 |
| | | | JP | 5661465 B2 | 28-01-2015 |
| | | | JP | 5795416 B2 | 14-10-2015 |
| | | | JP | 2011501571 A | 06-01-2011 |
| | | | JP | 2015039182 A | 26-02-2015 |
| | | | KR | 20100074283 A | 01-07-2010 |
| | | | KR | 20120060921 A | 12-06-2012 |
| | | | TW | 200934252 A | 01-08-2009 |
| | | | US | 2009097558 A1 | 16-04-2009 |
| | | | WO | 2009052205 A1 | 23-04-2009 |
| EP 2051529 | A1 | 22-04-2009 | CN | 101415120 A | 22-04-2009 |
| | | | EP | 2051527 A1 | 22-04-2009 |
| | | | EP | 2051529 A1 | 22-04-2009 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 16 30 6277

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2017

| Patent document cited in search report | | Publication date | Patent family member(s) | | Publication date |
|---|---|---|---|---|---|
| | | | JP 5346198 B2 | | 20-11-2013 |
| | | | JP 2009100473 A | | 07-05-2009 |
| | | | KR 20090038374 A | | 20-04-2009 |
| | | | US 2009110073 A1 | | 30-04-2009 |
| EP 3113492 | A1 | 04-01-2017 | EP 3113492 A1 | | 04-01-2017 |
| | | | WO 2017001344 A1 | | 05-01-2017 |

For more details about this annex : see Official Journal of the European Patent Office, No. 12/82

page 2 of 2

## REFERENCES CITED IN THE DESCRIPTION

### Patent documents cited in the description

- WO 2011002505 A

- WO 2010018137 A

### Non-patent literature cited in the description

- **Z. MAI et al.** On-the-fly tone mapping for backward-compatible high dynamic range image/video compression. *Proceedings of 2010 IEEE International Symposium on Circuits and Systems (ISCAS),* May 2010
- **M. GRUNDLAND et al.** Nonlinearmultiresolution blending. *Machine Graphics & Vision International Journal,* February 2006, vol. 15 (3), 381-390

- **Z. WANG et al.** Interactive tone mapping for high dynamic range video. *ICASSP,* 2010
- **P. BURT et al.** The Laplacian Pyramid as a compact image code. *IEEE Transactions on Communications,* April 1983, vol. 31 (4), 532-540
- The Pyramid as Structure for Efficient Computation. **P. BURT.** Multiresolution Image Processing and Analysis. Springer Series in Information Sciences, 1984, vol. 12, 6-35